# EUROPEAN PATENT APPLICATION

(11) **EP 4 718 851 A1**
(43) Date of publication of application: **01.04.2026**
(21) Application number: 24306600.8
(22) Date of filing: 30.09.2024
(51) Int. Cl.: H04N 19/597, G06T 9/00

(54) **MICRO PATCH GENERATION FOR 3D POINT CLOUD SURFACE DESCRIPTION**

(71) Applicant: InterDigital CE Patent Holdings, SAS, 75017 Paris (FR)
(72) Inventor: BORBA PINHEIRO, Rodrigo, 35700 RENNES (FR); MARVIE, Jean-Eudes, 35830 BETTON (FR)
(74) Representative: Vossius & Partner Patentanwälte Rechtsanwälte mbB

(57) **Abstract**

Systems and methods for point cloud attribute encoding and decoding. An encoding method includes selecting an orientation of a first micropatch centered on a first point of a first point cloud. For each of a plurality of pixels in the first micropatch, a respective point of the first point cloud is assigned to the respective pixel. For each of the pixels having an assigned point, attribute information of the assigned point is associated with the respective pixel. The attribute information of the pixels of at least the first micropatch is encoded.

## Description

### BACKGROUND

The present application is related to point cloud coding. The use of 3D applications is becoming more popular every day, and to be able to exploit said applications, different data formats are being used. One such data format is the point cloud. A point cloud (PC) is a set of unordered points with coordinates x, y, z, corresponding to the location of the point in the space and its attributes (colors, normal vectors, etc.).

The use of this new type of data invites the use of new compression methods to efficiently store and transmit data, especially since point clouds can have millions of points.

### SUMMARY

Briefly stated, in one embodiment, an encoding method includes selecting an orientation of a first micropatch centered on a first point of a first point cloud. For each of a plurality of pixels in the first micropatch, a respective point of the first point cloud is assigned to the respective pixel. For each of the pixels having an assigned point, attribute information of the assigned point is associated with the respective pixel. The attribute information of the pixels of at least the first micropatch is encoded. An encoding apparatus according to an example embodiment has one or more processors configured to perform any of the encoding methods as described herein.

Some embodiments include a signal encoded according to any of the encoding methods described herein. Further embodiments include a storage medium storing such a signal.

In one embodiment, a decoding method includes selecting an orientation of a first micropatch centered on a first point of a first point cloud. For each of a plurality of pixels in the first micropatch, a respective point of the first point cloud is assigned to the respective pixel. Attribute information of the pixels of at least the first micropatch is decoded. For each of the pixels having an assigned point, the decoded attribute information of the pixel is associated with the respective assigned point. A decoding apparatus according to an example embodiment has one or more processors configured to perform any of the encoding methods as described herein.

Some embodiments include a storage medium storing instructions operative to perform any of the encoding or decoding methods described herein.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 illustrates a point cloud and a variety of possible micropatch orientations.
FIGs. 2A-2F illustrate example methods of selecting micropatch orientations in a point cloud according to some embodiments.
FIG. 3 illustrates an alternative method of selecting micropatch orientations in a point cloud according to additional embodiments.
FIG. 4 illustrates a micropatch on which point cloud points have been projected according to an example embodiment.
FIGs. 5A-5B illustrate selection of a point to assign to a pixel of a micropatch according to some embodiments.
FIG. 6 schematically illustrates a micropatch including indices of the points assigned to each pixel according to the method used in FIGs. 5A-5B.
FIGs. 7A-7B illustrate selection of a point to assign to a pixel of a micropatch according to other embodiments.
FIG. 8 schematically illustrates a micropatch including indices of the points assigned to each pixel according to the method used in FIGs. 7A-7B.
FIGs. 9A-9B illustrate selection of a point to assign to a pixel of a micropatch according to further embodiments.
FIG. 10 schematically illustrates a micropatch including indices of the points assigned to each pixel according to the method used in FIGs. 9A-9B.
FIG. 11 illustrates downsampling of a point cloud according to some embodiments.
FIGs. 12A-12B illustrate forced generation of a micropatch according to some embodiments.
FIG. 13 is a functional block diagram illustrating an apparatus on which example embodiments may be performed.
FIG. 14 is a flow diagram illustrating an attribute encoding method according to some embodiments.
FIG. 15 is a flow diagram illustrating an attribute decoding method according to some embodiments.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

European patent application no. EP 24305212.3, filed 9 Feb. 2024, entitled "Micro Patch Convolutions for Point Cloud Attribute Compression," describes the use of a 2D patch convolution that would perform convolution on small approximations of the point cloud that were done using a surface approximation using a random sample consensus (RANSAC) algorithm. However, this algorithm lacks some control over the generated patches, especially their orientation, creating patches that have little interaction with their neighbor patches. The application introduces the notion of micropatch. A micropatch is a 2D square supported by a 3D plane onto which the principal components of the 3D voxel are projected. It thus summarizes the context of the center pixel of the 3D voxel and can be used by traditional 2D convolutional systems. The application describes examples of how to compute such micropatches and how to adapt deep architectures to use it for the compression of point cloud attributes (such as colors).

The present disclosure provides patch generation systems and methods ensure that aims to generate patches that follow an orientation that makes sense in the global scheme of the point cloud.

Instead of generating patches with arbitrary orientations, example embodiments define an orientation vector for the patch generation and, use a greedy algorithm to run thorough all the points in the point cloud, and create a vector field with the orientation of the patches to create the surface. Different methods may be used to create this vector field.

With systems and methods as described herein, the patches may have a closer relationship with their neighbor patches and may approximate even more closely the patch convolution to a regular 2D convolution in an image.

Example embodiments also define different methods of projection once the normal and the up vector have been determined to ensure that the micro patch is well filled with the index of voxels close to its surface extent.

To be able to approximate the points as microsurfaces, example embodiments generate the normal vectors of the point clouds. For that, any of a variety of different existing methods may be used. These methods should provide normal vectors that are oriented in the sense with regard to the "surface" described by the point cloud (e.g. either the vectors are all pointing to the outside of the volume delimited by the surface or they are all pointing to the inside). One implementation uses the normals generated in Meshlab by the function "Compute normal for point sets." Another implementation uses the estimated normal function in the Open3D algorithm.

The precise tool to be used to produce the normals has been found to have only a small impact on the general output. As long as the normals are correctly generated and follow the same orientation (all pointing outside the surface or all pointing inside the surface). However, in general, well generated normals produce better patches.

### Orientation Vector Generation

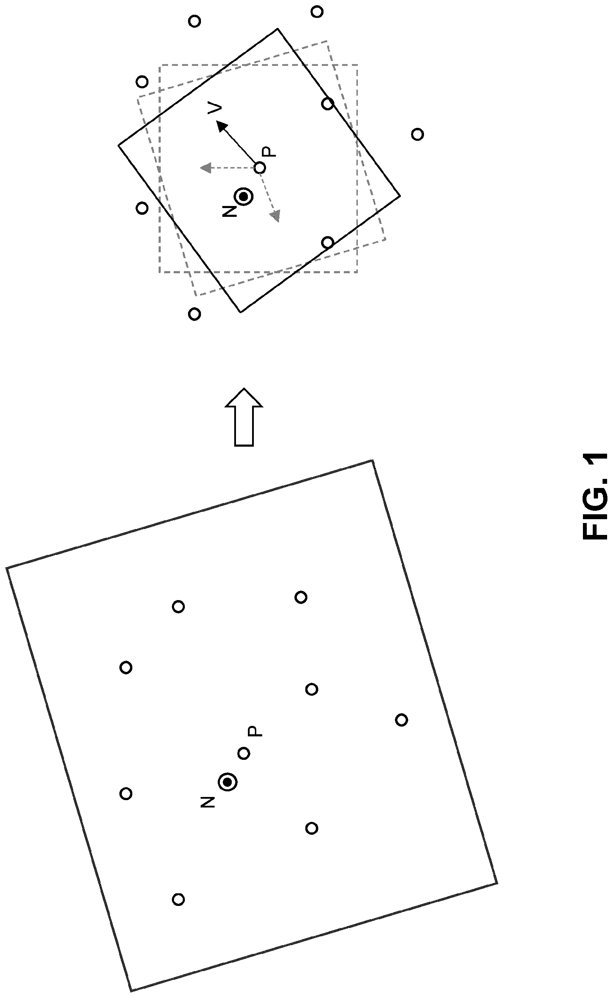

With the normal vector of a point, it is possible to produce a plane that has that point as the center and approximates the surface around it. Now example embodiments define an orientation for the micropatch. The micropatch is a small 2D image (e.g. 3x3, 5x5 or more) supported by the plane. Its center pixel is located at the point position and it is desirable to find the orientation of this image to be coherent with the neighboring micropatches. Note there is an infinity of possible orientations (i.e. rotation of the micropatch around the normal vector), as seen in FIG. 1.

As illustrated in FIG. 1, after the plane is determined by the normal vector (N) for the point P, the orientation of the micropatch is determined to produce the correct projection. The plane is observed on the left part of the figure. The micropatch, however, needs to be of finite size and has an orientation. On the right side of the figure, the square outlined by a solid black line represents the micropatch, and the orientation vector V. As said before, there are infinite possible orientations for vector V that would generate different micropatches. (Other possible vectors and micropatches are represented in dashed lines).

### First Example of Orientation Vector Generation

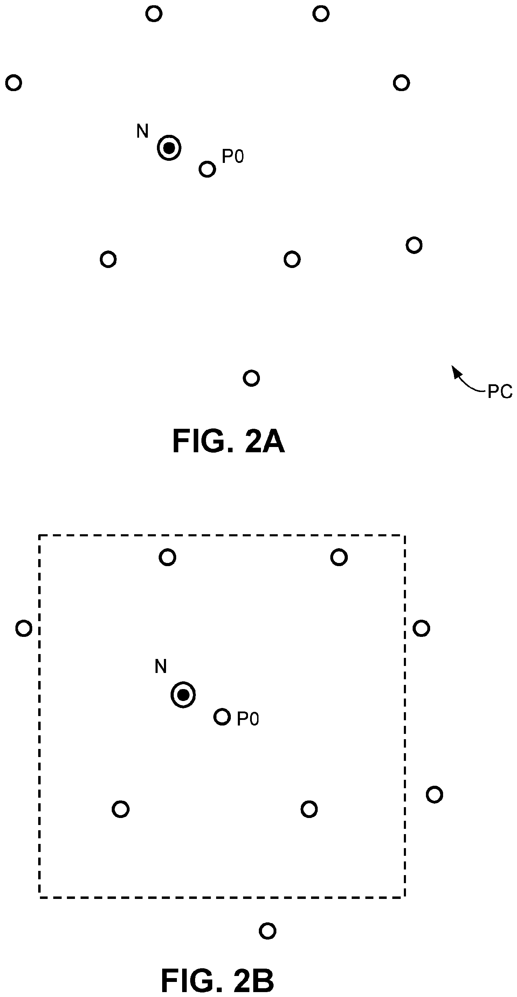

For this example, a greedy algorithm is used to generate the orientation vector. FIGs. 2A-2D provide a visual representation of steps of the example.

FIG. 2A illustrates a portion of a point cloud PC, with the points being represented by open circles. All points in the point cloud are set as non-marked and one non-marked point P0 is chosen (e.g. randomly) to start. The circle marked N represents the normal vector at point P0, which in this case is perpendicular to the plane of the drawing.

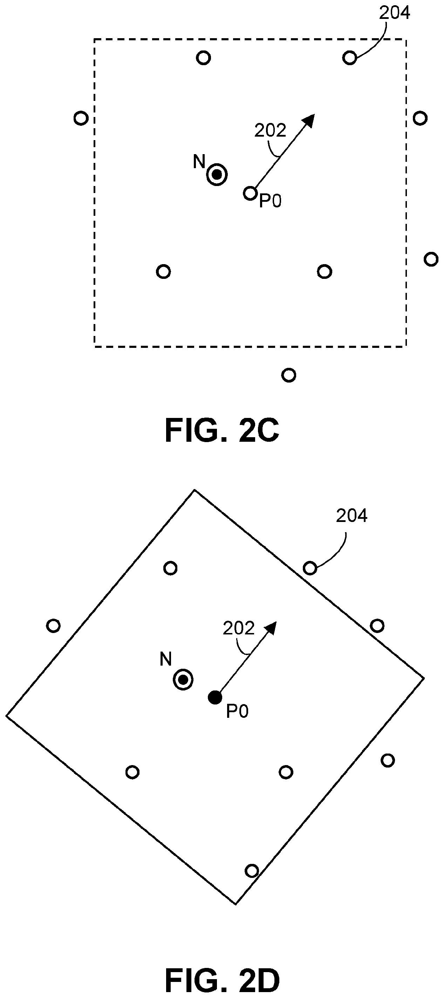

The points within a space of 5x5x5 neighborhood (or other size as appropriate) centered on point P0 are projected onto the plane defined by the previously calculated normal N, resulting in the points as shown in FIG. 2B. With the points projected, the orientation vector is chosen to be a vector 202 that is directed from the point P0 to the furthest neighbor 204 in the set of projected points, as shown in FIG. 2C. With the normal information and the orientation vector information, the first micropatch 206 is created using projection methods, as shown in FIG. 2D. The projection method used will be described in greater detail in the section "Patch Projection").

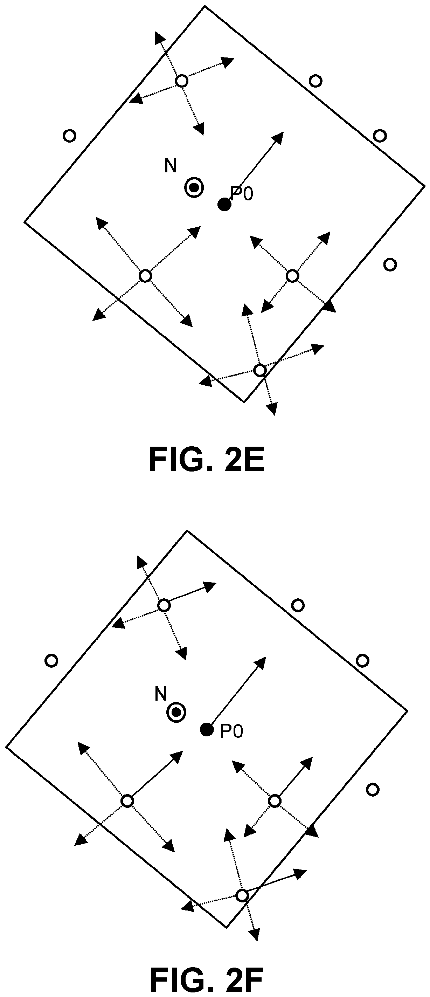

For subsequent micropatches after the first one, the initial orientation vector is defined as a vector that connects the central point to a neighbor that already has a defined orientation vector. With that information, the initial vector is rotated 90° counterclockwise three times to produce some candidate orientation vectors, shown as dotted arrows in in FIG. 2E. A selection is then made of the candidate orientation vector that is closer to the parent orientation vector in terms of angle. The resulting selected candidate vectors are converted to solid arrows in FIG. 2F. That provides some flexibility for the generated orientation vectors to create a vector field.

FIGs. 2A-2F thus provides a visual representation of definition of orientation vectors. After a micropatch is generated, new micropatches are generated for the points that already have their own orientation vector defined, and the process is repeated for all the newly created micropatches.

In some embodiments, a method of generating orientation vectors for a point cloud may be implemented according to the following pseudo-code.

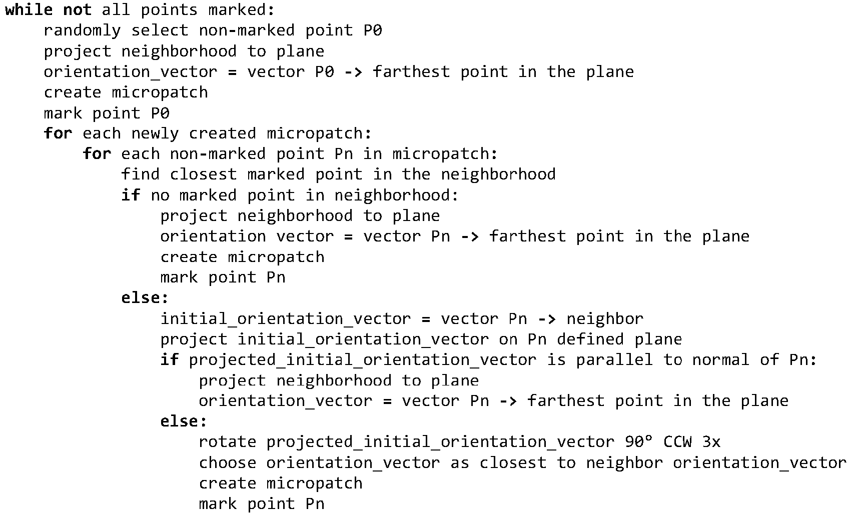

### Second Example of Orientation Vector Generation

In alternative embodiments, the orientation vector may be generated using a method such as the following. This method assumes one general orientation on the point cloud to guide all the orientation vectors. For example, the general orientation can be chosen to be [0,1,0], and the orientation vectors can be generated from this general orientation. For every point in the point cloud, the chosen vector is projected onto the plane defined by the normal vector of said point. This projected vector will serve as the orientation vector. For cases where the normal vector and the general orientation vector are parallel, it is not possible to project the general orientation vector onto the plane (the result would be a "vector" of length zero and undefined direction); in such cases, a second orientation vector may be selected, where the second orientation vector is perpendicular to the first one. For example, [0,0,1] may be used.

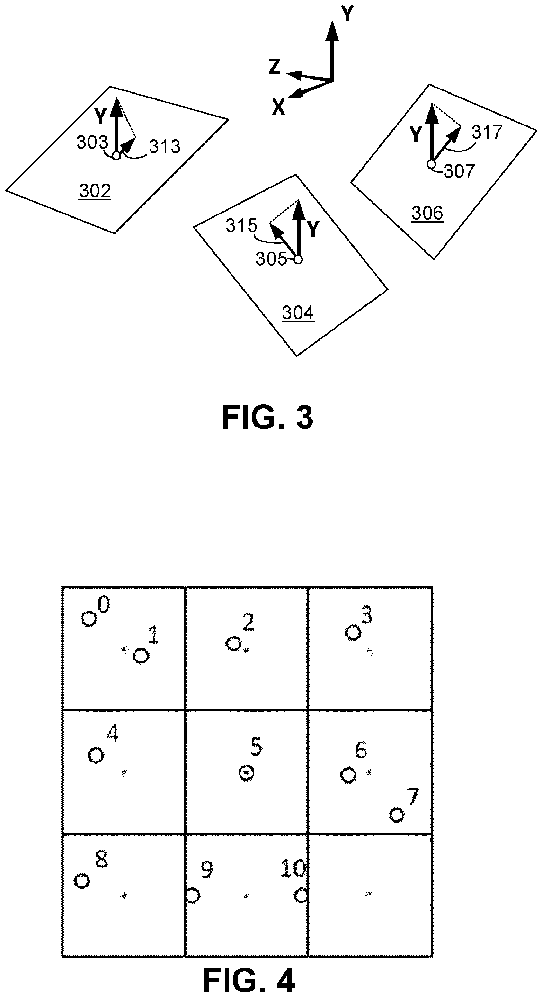

FIG. 3 illustrates an example of orientation vectors generated with the second method. The vectors are initially decided to be in [0,1,0] (illustrated as a vector along the Y axis in FIG. 3) and are projected to the surface defined by its point and then normalized. In FIG. 3, points 303, 305, and 307, together with their respective normal vectors (not illustrated), define respective planes 302, 304, and 306. The projection of the Y axis on those planes results in respective orientation vectors 313, 315, 317. This generates a vector field that gives a nice coherence between the orientations of neighboring points.

### Patch Projection

To be able to produce the micropatches, after defining the orientation vector, example embodiments project the points into the micropatch space. The desired space depends on the size of the chosen kernel for the convolution that will happen on the micropatches. In example embodiments, the micropatch is a square, and its pixels will have the same size as voxels of the point cloud. Since the micropatches are discrete, after the projection of points, they are allocated into the correct places. For simplicity, a 3x3 example is used here to help illustrate various embodiments. However, the patch can be of any size, as long as it matches the size of the kernel.

For the purposes of illustration, each of the projected points in the PC plane is indexed as illustrated in FIG. 4, with each of the small circles representing a point and the adjacent numeral representing the index of that point. FIG. 4 illustrates points that were projected in the micropatch space and are now to be selected.

### First Example of Patch Projection

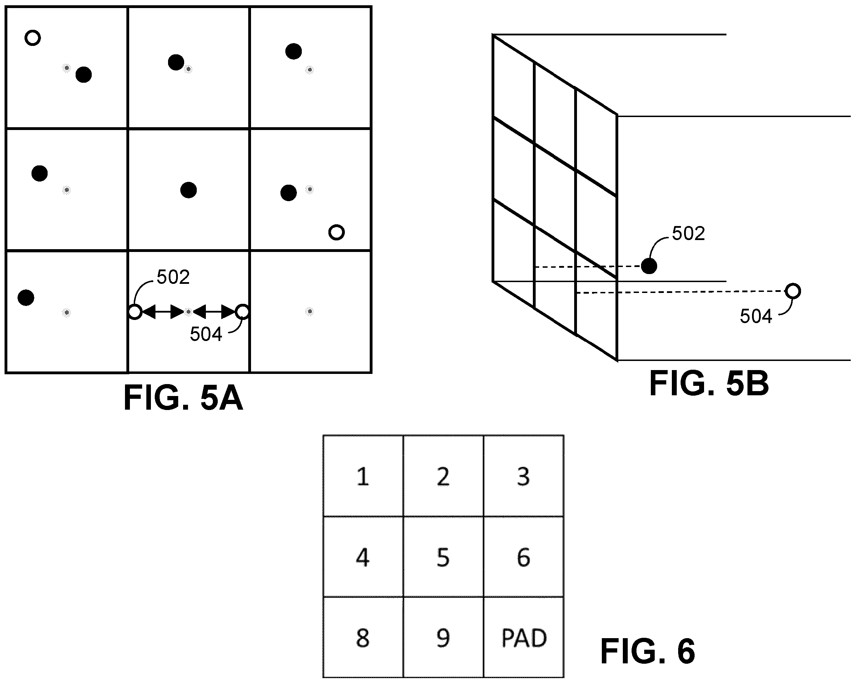

In a first example of patch projection, all the points are projected along the normal vector into the pixels of the micropatch. Within each pixel, the index corresponding to the projected point that is closest to the center of that pixel is assigned to be the index corresponding to the pixel. If there is a tie on the chosen distance (e.g. two projected points have the same distance to the center of the pixel), the chosen index is the one corresponding to the point that has the smallest distance to the plane (before projection). This process is shown in FIG. 5.

As shown in FIG. 5A, the projected point is chosen based on the distance between the center of the pixel and the projected voxels that are in the region. When there is a tie, such as the one in the bottom central block between points 502 and 504, the best point may be chosen based on its orthogonal distance to the plane. For example, as shown in FIG. 5B, where point 502 may be selected because it has a shorter distance to the plane than point 504.

This example does not allow for repetition of the voxels. Each point can appear in the micropatch only once. As for the block on the bottom right, in the micropatch of FIG. 4, since there are no candidate points to fill it, the index of that block may be set to a reserved index value for padding purposes. That way it will not get in the way of the convolutions that are performed as described below. The resulting indices using this example are shown in FIG. 6.

### Second Example of Patch Projection

A second example of a patch projection method is similar to the first example, but the second example allows extra points from one pixel to be added to a different pixel in the micropatch. That means that for a pixel in the micropatch that has no points in its surface, an example embodiment allows for the use of points that are inside a circle of radius R = 1 (as an example) to try and find new suitable points among those not already selected by the previous method. This may be done to avoid repetition inside the same patch and to reduce the amount of padded points in the micropatches, enriching the context for the central point.

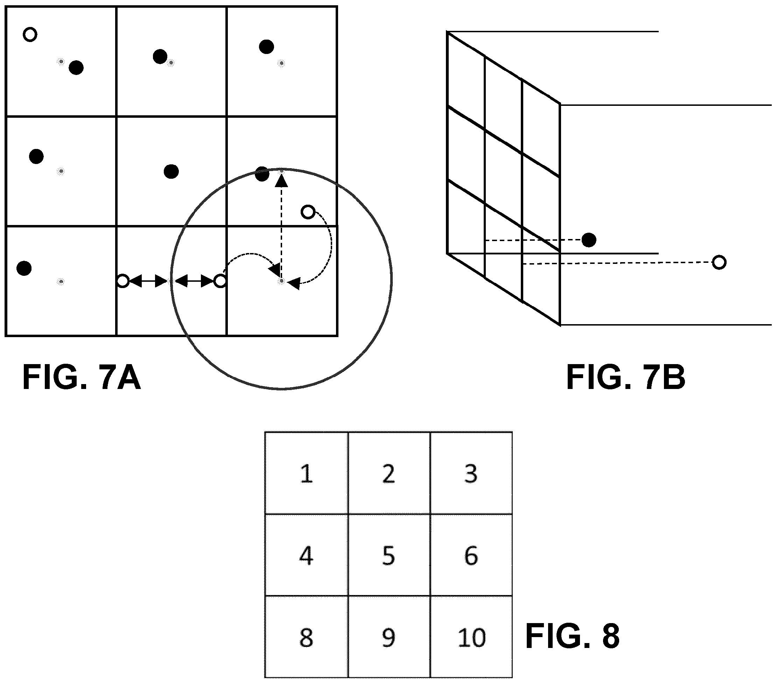

As seen in FIG. 7A-7B, this second example initially proceeds as in the first example. However, for the patch space on the bottom right, instead of filling it with a zero padding, the second example allows for selection of the closest point inside the circle that was not yet used to fill it. In this example the chosen point would be the point that is located on the bottom central space. Using this example, the result of the micropatch is as shown in FIG. 8.

### Third Example of Patch Projection

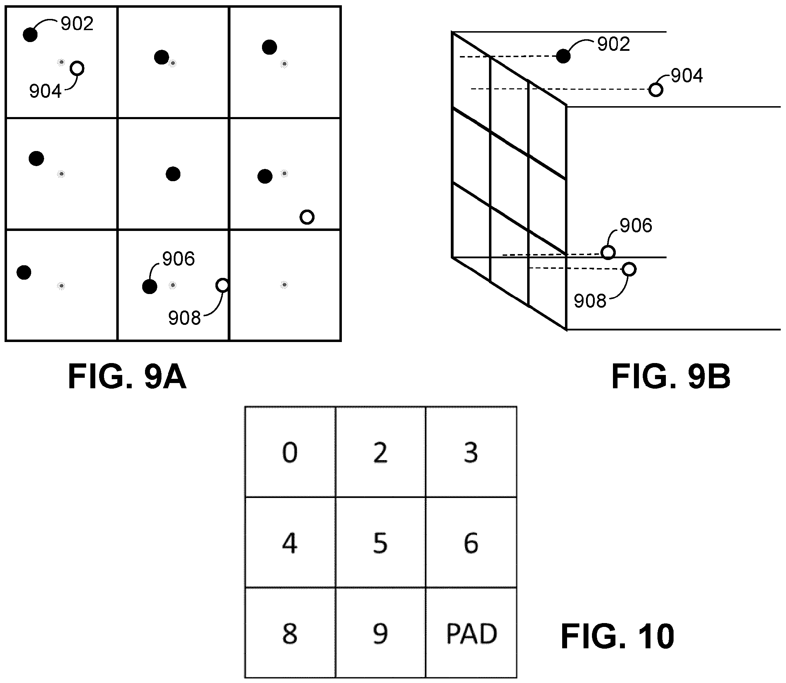

A third example of patch projection is similar to the first example, except the priorities in selecting the point are changed. Instead of taking as a priority the distance to the center of the space in the micropatch, the first criterion selects the point by its distance to the plane. If there is a tie, the point is chosen that is closest to the center of the micropatch space. This example is illustrated in FIGs. 9A-9B.

In FIGs. 9A-9B, on the top left corner, the chosen point 902 was chosen because it is closer to the plane in orthogonal distance than point 904. On the bottom center, the criteria to choose after a tie in the orthogonal distance is the projected distance on the plane, meaning the point 906 on the left is selected rather than point 908. FIG. 10 illustrates the indices selected using the third example of patch projection on the patch of FIG. 4.

### Fourth Example of Patch Projection

In a fourth example, conventional projection is not used. Instead, for each pixel of the micropatch, the point closest to the center of that pixel (in three-dimensional space) is selected. This example allows repetition of voxels inside the same micropatch. This method does not require orthogonal projection since it uses the closest point in the entire point cloud. In an example embodiment, a k-d tree is constructed with the entire point cloud to accelerate the search for nearest points.

### Downsampling of Point Cloud

To be able to use the micropatches in actual deep neural networks, in some embodiments it is desirable for the point cloud to be downsampled along the network. For example, a set of micropatches may be generated from a first point cloud, then the first point cloud may be downsampled to generate a second point cloud, and a second set of micropatches may be generated from the second point cloud. More generally, a point cloud at level L may be downsampled to generate a point cloud at level L+1. (Conversely, a point cloud at level L may have been generated by downsampling a point cloud at level L-1.) This process may be used to produce the latent space that will then be coded. In an example embodiment, the micropatch production is also adapted to that process.

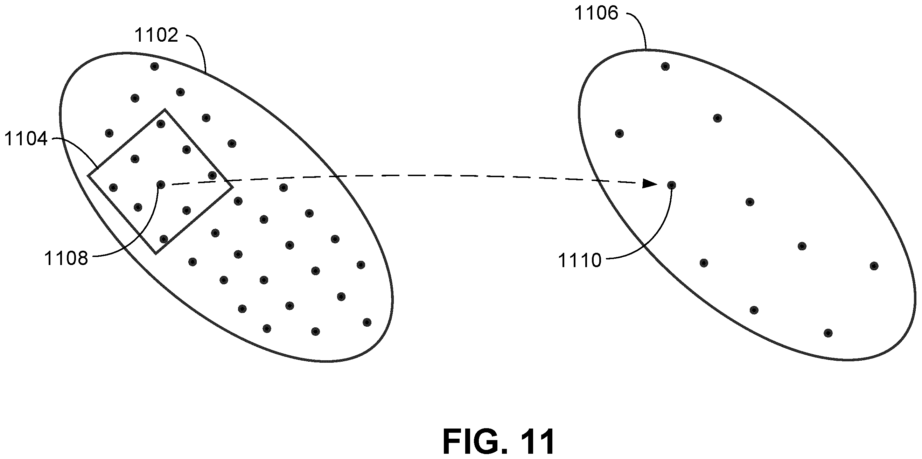

Some embodiments perform downsampling as follows. The point cloud may be downsampled using a decimating downsampling method (for example, downsampling may be performed by taking one point out of two) to produce level L+1 from level L. The downsampled points on level L+1 are matched with their respective equivalents on level L. The micropatches are generated on those points in level L. Micropatch convolutions are performed to produce the features for that point. This process mimics the downsampling that is performed in 2D regular learning based architectures, which downsample the images by using a convolution with a stride of 2. A method according to an example embodiment is illustrated in FIG. 11.

FIG. 11 illustrates a point cloud 1102 at a level L, including a micropatch 1104. The point cloud 1102 may be downsampled to produce point cloud 1106 at level L+1. The geometry information on L+1 is recovered which is equivalent to that of the points on level L, for example the geometry of the point 1108 is the same as that of point 1110. From these points, the micropatches are produced. For example, micropatch convolution may be performed on patch 1104 to produce the features. The produced features are injected in the correct position on level L+1. Subsequently, micropatches may be generated within downsampled point cloud 1106.

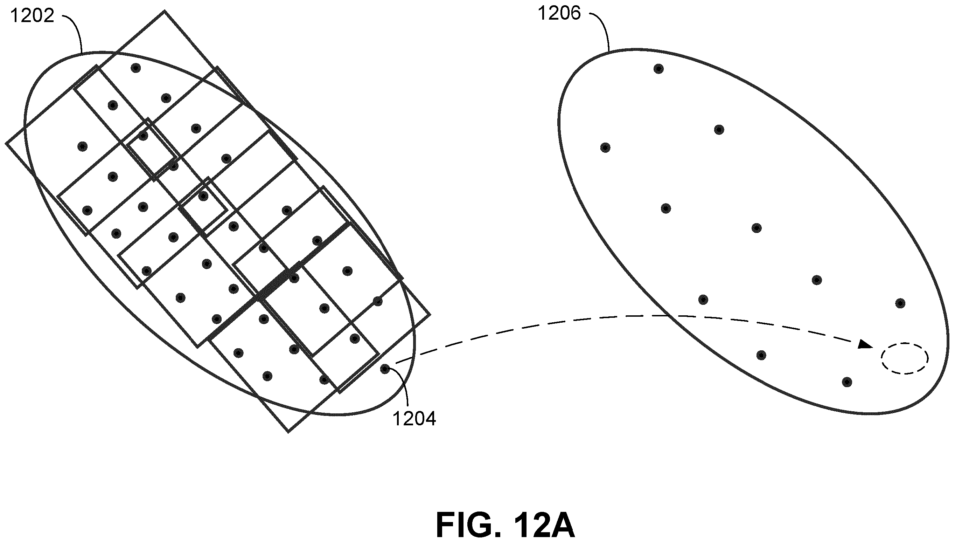

In some embodiments, since all the micropatches are produced beforehand, a determination may be made of whether all the points in the level L-1 were used in the construction of micropatches. If any of the points on level L were not used, the point may be forced to be part of the downsampled version of the point cloud, and a micropatch may be generated for that point. Such a technique prevents information loss during the downsampling process. An example of this process is shown in FIGs. 12A-12B.

FIGs. 12A-12B illustrate an example of using an added downsampled point to force the use of all the available data for downsampling and micropatch production. The steps described with respect to FIG. 11 are performed, and in addition, before performing the convolution and producing the features, there is a check of whether there are points that were not used in any patches. For example, FIG. 12A illustrates a point cloud 1202 at level L, together with a plurality of micropatches (which may be overlapping). However, point 1204 is not included in any micropatch. The level L point cloud 1202 is downsampled to generate level L+1 point cloud 1206. In some embodiments, for each point in level L that was not included in a micropatch, a determination is made of whether that point is included in the level L+1 point cloud. In this example, a determination is made that point 1204 is in the level L point cloud but is not in the downsampled level L+1 point cloud. In response to this determination, the level L+1 point cloud is modified to add new point 1208 with the geometry of point 1204. A new micropatch 1210 including point 1204 is then generated, and the results may be used in the convolutions.

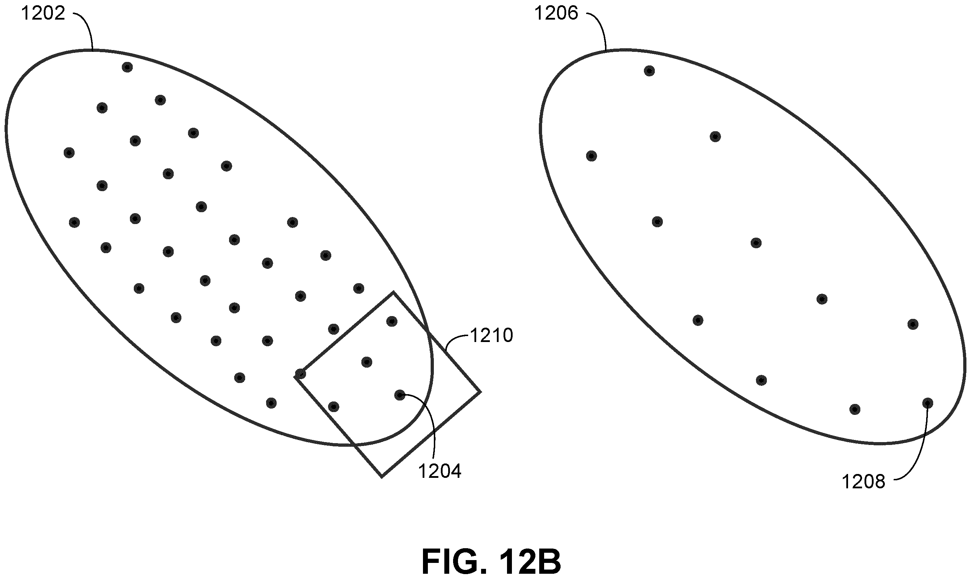

An example of pseudocode for a method such as that of FIG. 12 is as follows.

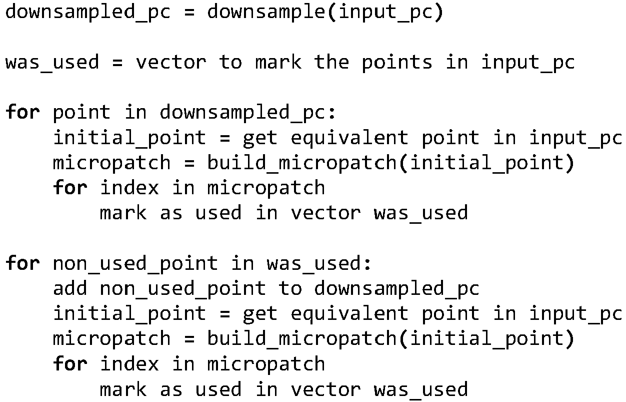

### Signaling/Syntax

Current activities in MPEG AI-PCC includes work on defining some Al models for compression and decompression of Point Clouds geometry and photometry. The MPEG group currently handles photometry separately from the geometry. Example embodiments as described herein permit the use of a different micropatch generation approach to the creation of the latent space, instead of using sparse convolutions throughout the model.

This approach can be applied to various different types of architecture. For example, different point cloud coding solutions using 2D convolutions and micropatches have been proposed to the MPEG standard. The patch generation described in this disclosure may be used for preprocessing for either or both of encoding and decoding in such point cloud coding solutions.

In some embodiments, information specifying which orientation vector generation mode is used may be signaled in a bitstream that encodes the point cloud. For example, information may be signaled to indicate whether the orientation vector generation used the progressive technique described above in the section "First Example of Orientation Vector Generation" or uses a general orientation for the point cloud as described in "Second Example of Orientation Vector Generation". In this way, the decoder may be provided with the information needed to create, on the decoder side, the same micropatches that were used on the encoder side.

The following table illustrates an example of signaling the use of the variational autoencoder (VAE), Normalizing Flow, or Wavelet in a point cloud Learning Based bitstream.

| | | |
|---|---|---|
| PHOTOMETRY_CODEC_ARCHITECTURE | 00: use Variational Auto-Encoder | 2 bit flag |
| | 01: use Normalizing flow | |
| | 10: use Wavelet | |
| USE_MICROPATCH | 0: use sparse convolutions | 1 bit flag |
| | 1: use micropatch convolutions | |
| COLOR_SPACE | 0: RGB | 1 bit flag |
| | 1: YUV | |
| UP_VECTOR_MODE | 0: progressive orientation vector generation first method | 1 bit flag |
| | 1: second method use general orientation vector orientation | |
| PROJECTION_MODE | 00: projection method 1 | 2 bit flag |
| | 01: projection method 2 | |
| | 10: projection method 3 | |
| | 11: projection method 4 | |

Example embodiments thus provide a new patch generation method for discrete 3D surface unfolding. Micropatches created using techniques as described herein may have a good interaction with the neighboring micropatches, creating a larger surface. Example embodiments may provide micropatches with an orientation that would make the convolution closer to the 2D regular convolution that works well for images.

### Example Methods

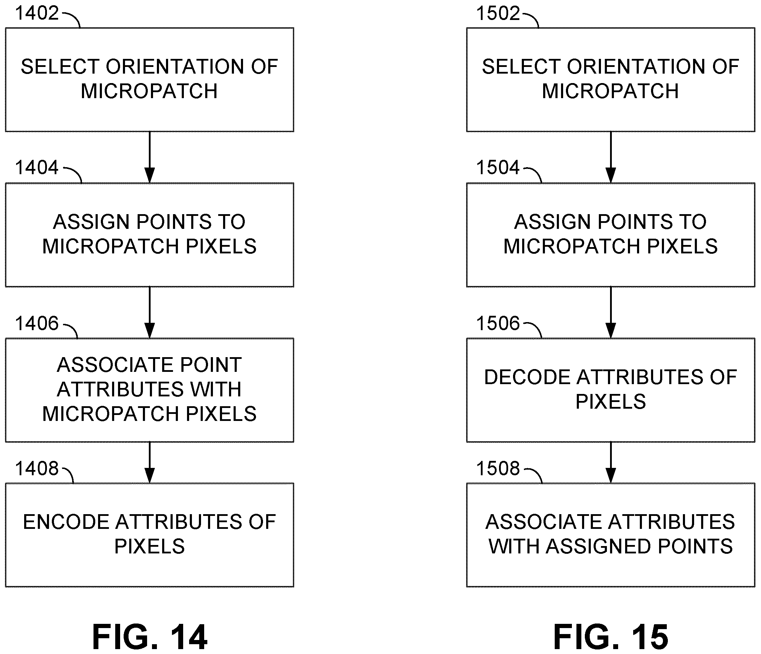

The example encoding methods described above may also be understood with reference to the flow chart of FIG. 14. As illustrated in FIG. 14, an encoding method includes selecting (1402) an orientation of a first micropatch centered on a first point of a first point cloud. For each of a plurality of pixels in the first micropatch, a respective point of the first point cloud is assigned (1404) to the respective pixel. (Some pixels may not have any assigned point.) For each of the pixels having an assigned point, attribute information of the assigned point is associated (1406) with the respective pixel. (For pixels with no assigned point, the pixel may be associated with a null value or a padded value representing attribute information.) The attribute information of the pixels of at least the first micropatch is encoded (1408).

An encoding apparatus according to an example embodiment has one or more processors configured to perform any of the encoding methods as described herein.

The example decoding methods described above may also be understood with reference to the flow chart of FIG. 15. As illustrated in FIG. 15, a decoding method includes selecting (1502) an orientation of a first micropatch centered on a first point of a first point cloud. For each of a plurality of pixels in the first micropatch, a respective point of the first point cloud is assigned (1504) to the respective pixel. Attribute information of the pixels of at least the first micropatch is decoded (1506). For each of the pixels having an assigned point, the decoded attribute information of the pixel is associated (1508) with the respective assigned point.

A decoding apparatus according to an example embodiment has one or more processors configured to perform any of the encoding methods as described herein.

Encoding or decoding methods as described herein may further include determining a first normal vector for the first point, wherein the first micropatch is in a plane perpendicular to the first normal vector. Various techniques are known for determining a normal vector of a point in a point cloud.

In encoding or decoding methods as described herein, selecting the orientation of the first micropatch may include selecting a first subset of points of the first point cloud within a neighborhood of the first point; projecting the first subset of points onto a plane of the first micropatch to obtain a plurality of projected points; identifying a projected point having a greatest distance from the first point; and selecting the orientation of the first micropatch based on a direction between the first point and the identified point having the greatest distance. An example of such a method is described above in the section "First Example of Orientation Vector Generation" with respect to FIGs. 2A-2D for selecting the orientation of the first micropatch in a point cloud.

In encoding or decoding methods as described herein, selecting the orientation of the first micropatch may include determining a first candidate vector based on a direction between the first point and a second point at the center of a second micropatch, the second micropatch having a second orientation vector; determining a plurality of additional candidate vectors by rotating the first candidate vector; and selecting the orientation of the first micropatch based on the candidate vector that has an orientation closest to the second orientation vector. An example of such a method is described above in the section "First Example of Orientation Vector Generation" with respect to FIGs. 2E-2F for selecting the orientation of subsequent micropatches in a point cloud.

In encoding or decoding methods as described herein, selecting the orientation of the first micropatch may include projecting a general orientation vector (such as a vector along the Y axis) onto a plane of the first micropatch and selecting the orientation of the first micropatch based on the projected general orientation vector, wherein the general orientation vector is used in selecting the orientation of a plurality of micropatches. An example of such a method is described above in the section "Second Example of Orientation Vector Generation" with respect to FIG. 3. Solutions may also be provided for cases where the general orientation vector is orthogonal to the plane of a micropatch, e.g. by defining a secondary general orientation vector (such as a vector along the Z axis).

Various different methods may be used for assigning a point in the point cloud to a respective pixel. Several such examples are described in the section "Patch Projection," although other techniques may alternatively be used. In some such methods, assigning a respective point of the first point cloud to the respective pixel is based at least in part on a distance of the respective point to a center of the respective pixel as measured in a plane of the first micropatch.

In some assignment methods, assigning a respective point of the first point cloud to the respective pixel comprises selecting a point from among a plurality of points that, when projected on a plane of the first micropatch, are within the respective pixel.

In some assignment methods, assigning a respective point of the first point cloud to the respective pixel is based at least in part on a distance of the respective point to a plane of the first micropatch.

In some assignment methods, assigning a respective point of the first point cloud to the respective pixel is based at least in part on three-dimensional distance of the respective point to a center of the respective pixel.

These different features of different assignment methods may be combined, which different criteria (e.g. distance from pixel center in the micropatch plane, distance from pixel center in 3D, distance from plane of micropatch, among others) being given different priorities in different embodiments.

In some embodiments of encoding or decoding methods as described herein, the first point cloud is downsampled to obtain a second point cloud. A determination is made of whether a third point in the second point cloud was not assigned to a pixel of any micropatch in the first point cloud. In response to a determination that the third point was not assigned to a pixel of any micropatch in the first point cloud, a third micropatch is generated in the first point cloud, the third micropatch being centered on the third point. An example of such a method is illustrated in the section "Downsampling of Point Cloud" as described above.

Some encoding methods include signaling, in a bitstream including the encoded attribute information, information identifying which method was used to assign respective points to respective pixels.

Some encoding methods include signaling, in a bitstream including the encoded attribute information, information identifying which method was used to determine micropatch orientation.

Some decoding methods include decoding, from a bitstream including the encoded attribute information, information identifying a method used to assign respective points to respective pixels. The decoder responsively decodes the micropatches using the identified method.

Some decoding methods include decoding, from a bitstream including the encoded attribute information, information identifying a method used to determine micropatch orientation. The decoder responsively decodes the micropatches using the identified method.

Various different encoding and decoding techniques may be used for encoding and decoding of the attributes assigned to pixels. Numerous techniques for encoding and decoding attributes of pixels (such as color information) are known, and the principles described herein are not limited to any particular technique. Known techniques for encoding attributes of pixel attributes in two dimensions are readily adapted to the encoding and decoding of the pixel information of micropatches as described herein. In some embodiments, the encoding and decoding is performed using variational autoencoder (VAE) techniques, normalizing flow techniques, or wavelet techniques. Other more conventional encoding and decoding techniques may alternatively be used, such as entropy coding or any 2D image coding technique.

### Example Apparatus

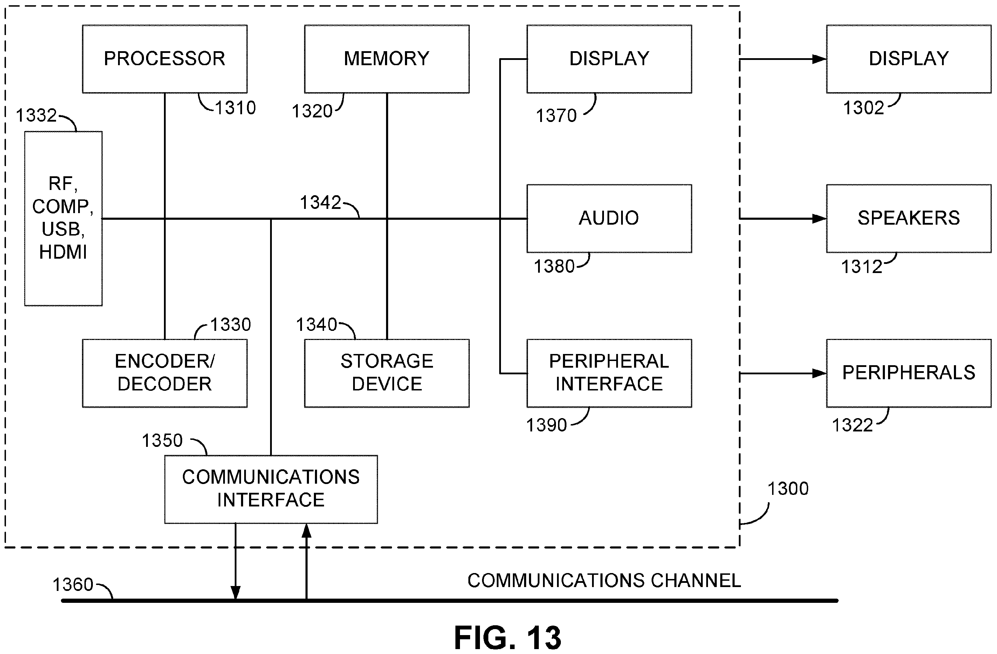

Some embodiments may be implemented on a system of one or more processors as illustrated in FIG. 13. FIG. 13 is a block diagram of an example of a system in which various aspects and embodiments are implemented. System 1300 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. An encoding method comprising:
selecting an orientation of a first micropatch centered on a first point of a first point cloud;
for each of a plurality of pixels in the first micropatch, assigning a respective point of the first point cloud to the respective pixel;
for each of the pixels having an assigned point, associating attribute information of the assigned point with the respective pixel; and
encoding the attribute information of the pixels of at least the first micropatch.

2. An encoding apparatus comprising one or more processors configured to perform at least:
selecting an orientation of a first micropatch centered on a first point of a first point cloud;
for each of a plurality of pixels in the first micropatch, assigning a respective point of the first point cloud to the respective pixel;
for each of the pixels having an assigned point, associating attribute information of the assigned point with the respective pixel; and
encoding the attribute information of the pixels of at least the first micropatch.

3. A decoding method comprising:
selecting an orientation of a first micropatch centered on a first point of a first point cloud;
for each of a plurality of pixels in the first micropatch, assigning a respective point of the first point cloud to the respective pixel;
decoding attribute information of the pixels of at least the first micropatch; and
for each of the pixels having an assigned point, associating the decoded attribute information of the pixel with the respective assigned point.

4. A decoding apparatus comprising one or more processors configured to perform at least:
selecting an orientation of a first micropatch centered on a first point of a first point cloud;
for each of a plurality of pixels in the first micropatch, assigning a respective point of the first point cloud to the respective pixel;
decoding attribute information of the pixels of at least the first micropatch; and
for each of the pixels having an assigned point, associating the decoded attribute information of the pixel with the respective assigned point.

5. The method of claim 1 or 3, or the apparatus of claim 2 or 4, further comprising determining a first normal vector for the first point, wherein the first micropatch is in a plane perpendicular to the first normal vector.

6. The method of claim 1 or 3, or claim 5 as it depends from claim 1 or 3, or the apparatus of claim 2 or 4, or claim 5 as it depends from claim 2 or 4, wherein selecting the orientation of the first micropatch comprises:
selecting a first subset of points of the first point cloud within a neighborhood of the first point;
projecting the first subset of points onto a plane of the first micropatch to obtain a plurality of projected points;
identifying a projected point having a greatest distance from the first point; and
selecting the orientation of the first micropatch based on a direction between the first point and the identified point having the greatest distance.

7. The method of claim 1 or 3, or claim 5 as it depends from claim 1 or 3, or the apparatus of claim 2 or 4, or claim 5 as it depends from claim 2 or 4, wherein selecting the orientation of the first micropatch comprises:
determining a first candidate vector based on a direction between the first point and a second point at the center of a second micropatch, the second micropatch having a second orientation vector;
determining a plurality of additional candidate vectors by rotating the first candidate vector; and
selecting the orientation of the first micropatch based on the candidate vector that has an orientation closest to the second orientation vector.

8. The method of claim 1 or 3, or claim 5 as it depends from claim 1 or 3, or the apparatus of claim 2 or 4, or claim 5 as it depends from claim 2 or 4, wherein selecting the orientation of the first micropatch comprises:
projecting a general orientation vector onto a plane of the first micropatch; and
selecting the orientation of the first micropatch based on the projected general orientation vector;
wherein the general orientation vector is used in selecting the orientation of a plurality of micropatches.

9. The method of claim 1 or 3, or claims 5-8 as they depend from claim 1 or 3, or the apparatus of claim 2 or 4, or claims 5-8 as they depend from claim 2 or 4, wherein assigning a respective point of the first point cloud to the respective pixel is based at least in part on a distance of the respective point to a center of the respective pixel as measured in a plane of the first micropatch.

10. The method of claim 1 or 3, or claims 5-9 as they depend from claim 1 or 3, or the apparatus of claim 2 or 4, or claims 5-9 as they depend from claim 2 or 4, wherein assigning a respective point of the first point cloud to the respective pixel comprises selecting a point from among a plurality of points that, when projected on a plane of the first micropatch, are within the respective pixel.

11. The method of claim 1 or 3, or claims 5-10 as they depend from claim 1 or 3, or the apparatus of claim 2 or 4, or claims 5-10 as they depend from claim 2 or 4, wherein assigning a respective point of the first point cloud to the respective pixel is based at least in part on a distance of the respective point to a plane of the first micropatch.

12. The method of claim 1 or 3, or claims 5-11 as they depend from claim 1 or 3, or the apparatus of claim 2 or 4, or claims 5-11 as they depend from claim 2 or 4, wherein assigning a respective point of the first point cloud to the respective pixel is based at least in part on three-dimensional distance of the respective point to a center of the respective pixel.

13. The method of claim 1 or 3, or claims 5-12 as they depend from claim 1 or 3, or the apparatus of claim 2 or 4, or claims 5-12 as they depend from claim 2 or 4, further comprising:
downsampling the first point cloud to obtain a second point cloud; and
determining whether a third point in the second point cloud was not assigned to a pixel of any micropatch in the first point cloud;
in response to a determination that the third point was not assigned to a pixel of any micropatch in the first point cloud, generating a third micropatch in the first point cloud, the third micropatch being centered on the third point.

14. The method of claim 1, or claims 5-13 as they depend from claim 1, or the apparatus of claim 2, or claims 5-13 as they depend from claim 2, further comprising:
in a bitstream including the encoded attribute information, signaling information identifying one or both of: a method used to assign respective points to respective pixels or a method used to determine micropatch orientation.

15. The method of claim 3, or claims 5-13 as they depend from claim 3, or the apparatus of claim 4, or claims 5-13 as they depend from claim 4, further comprising:
from a bitstream including the encoded attribute information, decoding information identifying one or both of: a method used to assign respective points to respective pixels or a method used to determine micropatch orientation.
